# EUROPÄISCHE PATENTSCHRIFT

(11) **EP 4 511 937 B1**
(45) Veröffentlichungstag und Bekanntmachung des Hinweises auf die Patenterteilung: **09.12.2026**
(21) Anmeldenummer: 23735635.7
(22) Anmeldetag: 21.06.2023
(51) Int. Cl.: H02J 1/10, H02J 7/00

(54) **BETREIBEN EINER ELEKTROLYSEZELLE**
OPERATING AN ELECTROLYSIS CELL
FONCTIONNEMENT D'UNE CELLULE ÉLECTROLYTIQUE

(30) Priorität: 06.07.2022 DE 102022206877
(43) Veröffentlichungstag der Anmeldung: 26.02.2025
(73) Patentinhaber: Siemens Energy Global GmbH & Co. KG, 81739 München (DE)
(72) Erfinder: SCHUMANN, Sven, 91452 Wilhermsdorf (DE); BENNINGHOFF, Moritz, 45478 Mülheim an der Ruhr (DE)
(86) Internationale Anmeldenummer: PCT/EP2023/066888
(87) Internationale Veröffentlichungsnummer: WO 2024/008461

(56) Entgegenhaltungen:
- EP-A1- 3 982 501
- AU-A1- 2020 225 222
- DE-A1- 102014 014 091
- DE-A1- 102019 200 238
- DE-A1- 102020 112 880

## Beschreibung

Die Erfindung betrifft ein Verfahren zum Betreiben einer Elektrolysezelle, die im bestimmungsgemäßen Betrieb mit einem elektrischen Elektrolysestrom beaufschlagt wird, um eine Elektrolyse eines in einem Reaktionsraum der Elektrolysezelle angeordneten Stoffs durchzuführen, wobei die Elektrolysezelle in einem von dem bestimmungsgemäßen Betrieb verschiedenen Betriebszustand mit einem Gleichstrom als individuellem Schutzstrom beaufschlagt wird. Die Erfindung betrifft weiterhin eine Schutzeinheit für eine Elektrolysezelle, wobei die Elektrolysezelle ausgebildet ist, in einem bestimmungsgemäßen Betrieb mit einem elektrischen Elektrolysestrom beaufschlagt zu werden, um eine Elektrolyse eines in einem Reaktionsraum der Elektrolysezelle angeordneten Stoffs durchzuführen, mit wenigstens zwei Anschlusskontakten zum elektrischen Anschließen an Elektroden der Elektrolysezelle, wenigstens zwei Verbindungsanschlüssen zum elektrischen Verbinden mit einer elektrischen Energiequelle, einem mit den wenigstens zwei Verbindungsanschlüssen und den Anschlusskontakten elektrisch gekoppelten, steuerbaren elektrischen Energiewandler, der ausgebildet ist, die Elektrolysezelle in einem von dem bestimmungsgemäßen Betrieb verschiedenen Betriebszustand mit einem Gleichstrom als individuellem Schutzstrom zu beaufschlagen. Darüber hinaus betrifft die Erfindung ein Schutzgerät für eine eine Mehrzahl von elektrisch in Reihe geschalteten Elektrolysezellen aufweisende Elektrolysevorrichtung, mit einer Mehrzahl von Schutzeinheiten, wobei jede der Elektrolysezellen mit jeweils einer Schutzeinheit elektrisch gekoppelt ist, wenigstens einer elektrischen Energiequelle zum Versorgen der Schutzeinheiten mit elektrischer Energie, und einer Steuereinheit zum individuellen Steuern der Schutzeinheiten. Schließlich betrifft die Erfindung auch eine Elektrolysevorrichtung mit einer Mehrzahl von elektrisch in Reihe geschalteten Elektrolysezellen sowie einem mit den Elektrolysezellen elektrisch gekoppelten Schutzgerät.

Elektrolysevorrichtungen, Schutzgeräte, Schutzeinheiten für Schutzgeräte sowie Verfahren zum Betreiben von Elektrolysezellen sind im Stand der Technik umfänglich bekannt, sodass es dem Grunde nach eines gesonderten druckschriftlichen Nachweises hierfür nicht bedarf. Gattungsgemäße Elektrolysezellen sowie Elektrolysevorrichtungen, insbesondere für die Elektrolyse von Wasser zu Wasserstoff und Sauerstoff, sind im Stand der Technik umfänglich bekannt, so zum Beispiel aus der DE 197 29 529 C1. Die grundlegende Funktion der Elektrolyse, insbesondere der Wasserelektrolyse, ist dem Fachmann bekannt, weshalb von detaillierten Erläuterungen hierzu vorliegend abgesehen wird.

Elektrolysevorrichtungen, die eine einzelne, insbesondere jedoch eine Vielzahl von Elektrolysezellen, aufweisen, die in der Regel zumindest teilweise elektrisch in Reihe geschaltet sind, dienen unter anderem dazu, vorzugsweise im industriellen Umfang nutzbare Stoffe, beispielsweise Wasserstoff bei einer Wasserelektrolyse, Kohlenmonoxid bei einer Kohlendioxidelektrolyse oder dergleichen herzustellen. Zu diesem Zweck sind wenigstens zwei Elektroden einer jeweiligen Elektrolysezelle mit einer geeigneten kleinen elektrischen Gleichspannung beaufschlagt, die im Bereich von einigen wenigen Volt oder eventuell sogar kleiner als ein Volt sein kann. Entsprechend der durch die Elektrolyse bereitzustellenden Stoffmenge wird von einer Elektrolyseenergiequelle ein entsprechender elektrischer Gleichstrom als Elektrolysestrom bereitgestellt. Bei in Reihe geschalteten Elektrolysezellen durchströmt dieser Gleichstrom sämtliche der in Reihe geschalteten Batteriezellen. Die Reihenschaltung ist elektrisch mit der Elektrolyseenergiequelle gekoppelt. Dem Grunde nach ist es jedoch auch möglich, Elektrolysezellen nicht nur in Reihe, sondern zumindest teilweise auch parallel zu schalten.

Insbesondere bei wässrigen Elektrolysen, wie zum Beispiel Chlor/Alkali-Elektrolysen, PEM-Elektrolysen oder dergleichen, ist häufig eine Membran vorgesehen, welche jeweilige Reaktionskammern jeweiliger Reaktionsbereiche einer jeweiligen Elektrolysezelle, in denen jeweilige Elektroden angeordnet sind, trennt. Häufig ist auf einer solchen Membran ein Katalysator angeordnet, um den Vorgang der Elektrolyse zu ermöglichen beziehungsweise zu beschleunigen. Die Elektrolyse wird in der Regel dadurch bewirkt, dass die Elektroden einer jeweiligen Elektrolysezelle im bestimmungsgemäßen Betrieb mit dem Elektrolysestrom beziehungsweise einer geeigneten elektrischen Gleichspannung, auch Zellenspannung genannt, beaufschlagt sind.

Als zumindest teilweise kritisch für eine jeweilige Elektrolysezelle erweist sich unter anderem ein Übergang von oder zu einem vom bestimmungsgemäßen Betriebszustand verschiedenen Betriebszustand. Dies bezieht sich insbesondere auf ein Anfahren der Elektrolysezelle beziehungsweise der Elektrolysevorrichtung sowie auch ein Herunterfahren der Elektrolysezelle beziehungsweise der Elektrolysevorrichtung. Besonders beim Herunterfahren nach dem bestimmungsgemäßen Betrieb können noch Reststoffe, insbesondere Restgase, in der Elektrolysezelle vorhanden sein, die unter Umständen dazu führen können, dass die Elektrolysezelle eine Brennstoffzellenfunktionalität zeigen kann. Hierdurch kann jedoch die Elektrolysezelle irreversibel beschädigt werden, weshalb die Brennstoffzellenfunktionalität unbedingt vermieden werden soll. Zu diesem Zweck ist es bekannt, die Elektrolysezelle außerhalb des bestimmungsgemäßen Betriebs mit einer Schutzspannung, auch Polarisationsspannung genannt, zu beaufschlagen, die so gewählt ist, dass die Brennstoffzellenfunktionalität weitgehend vermieden werden kann. Bei einer Elektrolysezelle zum Elektrolysieren von Wasser kann die Schutzspannung zum Beispiel etwa 1,25 V betragen. Sobald die Elektrolysezelle entsprechend abgekühlt und Restgase entfernt sind, kann das Bereitstellen der Schutzspannung deaktiviert werden.

Es hat sich gezeigt, dass Elektrolysezellen unterschiedlich voneinander altern und/oder voneinander abweichende Charakteristiken aufweisen können. Besonders bei einer Reihenschaltung von Elektrolysezellen kann sich dies als problematisch erweisen, wenn die Schutzspannung durch eine an die Reihenschaltung angelegte Spannung bereitgestellt werden soll. Aufgrund der unterschiedlichen Alterung beziehungsweise Charakteristiken kann nämlich der Fall eintreten, dass sich die an die Reihenschaltung angelegte Spannung nicht gleichmäßig auf alle in Reihe geschalteten Zellen aufteilt. Daher ist es dann erforderlich, die elektrische Spannung der Reihenschaltung so groß zu wählen, dass für die ungünstigste Elektrolysezelle die Schutzspannung noch zuverlässig erreicht werden kann. Dies führt jedoch dazu, dass die anderen Zellen mit einer entsprechend hohen Spannung beaufschlagt werden, die deutlich größer als die Schutzspannung sein kann, sodass diese weiterhin im Elektrolysebetrieb betrieben werden. Zur Vermeidung eines explosionsfähigen Gemisches in diesen Elektrolysezellen ist es daher üblich, mit Stickstoff zu spülen.

Aus der EP 3 982 501 A1 ist es ferner bekannt, jede Elektrolysezelle einzeln mit einer Schutzspannung zu beaufschlagen. Die Bereitstellung der jeweiligen Schutzspannungen für die Elektrolysezellen sowie die hiermit verbundenen im Wesentlichen konstanten Gleichströme erweisen sich jedoch als vergleichsweise aufwendig. Weiterer Stand der Technik ist aus der DE 102020112880 A1 und der DE 102014014091 A1 bekannt.

Der Erfindung liegt die Aufgabe zugrunde, den Aufwand für eine verbesserte Schutzfunktion zur Vermeidung des Brennstoffzellenbetriebs einer jeweiligen Elektrolysezelle zu reduzieren. Ferner liegt der Erfindung die Aufgabe zugrunde, ein entsprechendes Verfahren, ein entsprechendes Schutzgerät sowie eine entsprechende Elektrolysevorrichtung anzugeben.

Mit der Erfindung wird in Bezug auf ein gattungsgemäßes Verfahren insbesondere vorgeschlagen, dass die Elektrolysezelle mit einem getakteten Gleichstrom als dem individuellen Schutzstrom beaufschlagt wird.

In Bezug auf eine gattungsgemäße Schutzeinheit wird mit der Erfindung vorgeschlagen, dass der Energiewandler ausgebildet ist, die Elektrolysezelle mit einem getakteten Gleichstrom als dem individuellen Schutzstrom zu beaufschlagen.

In Bezug auf ein gattungsgemäßes Schutzgerät wird mit der Erfindung insbesondere vorgeschlagen, dass die Schutzeinheiten gemäß der Erfindung ausgebildet sind.

In Bezug auf eine gattungsgemäße Elektrolysevorrichtung wird mit der Erfindung insbesondere vorgeschlagen, dass das Schutzgerät gemäß der Erfindung ausgebildet ist.

Die Erfindung basiert unter anderem auf dem Gedanken, dass die Elektrolysezellen im vom bestimmungsgemäßen Betrieb verschiedenen Betrieb nicht mit einem konstanten Gleichstrom beaufschlagt zu werden brauchen. Unter Berücksichtigung einer elektrischen Kapazität einer jeweiligen Elektrolysezelle ist es möglich, die gewünschte Funktion auch mit einem getakteten Gleichstrom beziehungsweise einem gepulsten Gleichstrom erreichen zu können. Dabei meint ein getakteter Gleichstrom, dass eine Amplitude nicht konstant ist, jedoch kein Polarisationswechsel in Bezug auf den Gleichstrom auftritt. Insbesondere kann vorgesehen sein, dass eine jeweilige der Elektrolysezellen mit einem stromgesteuerten getakteten Gleichstrom beaufschlagt wird. Dadurch ist es möglich, anhand einer erfassten elektrischen Spannung als Zellenspannung an der jeweiligen Elektrolysezelle zu ermitteln, ob die Schutzspannung erreicht wird. Zu diesem Zweck kann eine entsprechende Sensoreinheit vorgesehen sein, die ebenfalls mit den Elektroden der jeweiligen Elektrolysezelle elektrisch gekoppelt ist. Dabei basiert die Erfindung unter anderem auf dem Gedanken, dass sich die Elektrolysezelle elektrisch wie eine elektrische Kapazität verhalten kann. Durch Einstellen des getakteten Gleichstroms kann somit die gewünschte Schutzfunktion auf einfache Weise realisiert werden. Dabei erweist es sich als vorteilhaft, dass eine genaue Regelung der Schutzspannung und eine entsprechende Bereitstellung eines konstanten Gleichstroms nicht zu erfolgen braucht. Dies ist insbesondere für den Aufwand zur Bereitstellung des Gleichstroms vorteilhaft. Insbesondere können nämlich gleichstromseitig aufwendige Glättungseinheiten reduziert oder sogar vermieden werden.

Der getaktete Gleichstrom kann eine vorgegebene beziehungsweise vorgebbare Frequenz oder Taktrate aufweisen. Vorzugsweise meint vorgegebene beziehungsweise vorgebbare Frequenz oder Taktrate vorliegend, dass die Frequenz beziehungsweise Taktrate wenigstens für eine vorgegebene Mehrzahl von Taktperioden entsprechend der Vorgabe im Wesentlichen konstant ist. Die Frequenz beziehungsweise Taktrate kann unter anderem abhängig von einer minimalen oder auch mittleren erfassten elektrischen Zellenspannung, einem vorgegeben minimalen elektrischen Zellenstrom, einem vorgegebenen mittleren Zellenstrom und/oder dergleichen vorgegeben werden. Beispielsweise erreicht der getaktete Gleichstrom in wenigstens einer Taktpause den Wert null. Der getaktete Gleichstrom kann ein vorgegebenes oder vorgebbares Tastverhältnis aufweisen. Es kann vorgesehen sein, dass das Tastverhältnis abhängig von der Zellenspannung eingestellt wird. Vorzugsweise weist der getaktete Gleichstrom eine im Wesentlichen feste Frequenz auf.

Die Zellenspannung ist eine elektrische Spannung zwischen wenigstens zwei Elektroden der Elektrolysezelle. Das Erfassen der Zellenspannung kann kontinuierlich und/oder zeitdiskret erfolgen. Die erfasste Zellenspannung kann gemittelt werden. Die Zellenspannung kann zum Beispiel auch lediglich in einer Taktpause oder während eines Stromimpulses des getakteten Gleichstroms erfasst werden. Vorzugsweise wird mit dem Erfassen der Zellenspannung zugleich auch erfasst, ob das Erfassen während der Taktpause oder des Stromimpulses erfolgt.

Vorzugsweise handelt es sich bei der Elektrolysezelle um eine PEM-Elektrolysezelle. Die PEM-Elektrolysezelle ist eine Zelle, die eine Protonen-Austausch-Membran, häufig auch Proton Exchange Membrane (PEM) oder Polymer Electrolyte Membrane (PEM) genannt, aufweist. Die PEM ist eine im Allgemeinen aus Ionomer hergestellte semipermeable Membran. PEMs sind für Protonen durchlässig, während der Transport von Gasen, wie beispielsweise Sauerstoff oder Wasserstoff, im Wesentlichen verhindert wird. Hergestellt werden PEMs zum Beispiel entweder aus reinen Polymer- oder aus Kompositmembranen, bei denen andere Materialien in eine Polymermatrix eingebettet werden. Eine kommerziell verfügbare PEM ist beispielsweise Nafion des Chemiekonzerns DuPont. PEM-Elektrolysezellen haben insbesondere gegenüber alkalischen Elektrolysezellen den Vorteil, dass Ableitwiderstände erheblich kleiner sein können. Dadurch kann nicht nur ein großer Wirkungsgrad im Vergleich zu alkalischen Elektrolysezellen erreicht werden, sondern es kann auch eine große flächenspezifische Zeitkonstante im Vergleich zu alkalischen Elektrolysezellen erreicht werden. Mit PEM-Elektrolysezellen können daher große Zeitkonstanten insbesondere in Bezug auf elektrische Parameter wie Zellenspannung und Zellenstrom erreicht werden. Dies kann sich auf eine Einstellung des getakteten Gleichstroms auswirken.

Mit der Erfindung ist es also möglich, eine Einzelversorgung der Elektrolysezellen erheblich zu vereinfachen. Zugleich können die Vorteile, die mit der Einzelversorgung der Elektrolysezellen erreicht werden können, weiterhin realisiert werden. Insgesamt können der Aufwand sowie auch die hiermit verbundenen Kosten reduziert werden. Besonders vorteilhaft erweist es sich, dass bei der Erfindung keine Einzelversorgung der Schutzeinheiten mit einer jeweiligen eigenen Energieversorgung erforderlich ist. Vielmehr können die Schutzeinheiten auch aus einer gemeinsam genutzten Energiequelle versorgt sein. Darüber hinaus ermöglicht es die Erfindung, das Erfassen der elektrischen Spannung einer jeweiligen Elektrolysezelle in die Funktion der Bereitstellung des getakteten Gleichstroms zu integrieren, sodass eine Spannungsmessung mit geringem Aufwand erreicht werden kann.

Darüber hinaus wurde durch die Erfindung gefunden, dass die Nutzung eines getakteten Gleichstroms keinen signifikanten Einfluss auf die Alterung der jeweiligen Elektrolysezelle hat. Insgesamt kann somit erreicht werden, dass Aufwand und Kosten reduziert und zugleich die Schutzfunktion zur Vermeidung eines Brennstoffzellenbetriebs verbessert werden können.

Darüber hinaus erlaubt es die Erfindung, für jede Elektrolysezelle den individuellen Schutzstrom individuell einstellen zu können. Dadurch können insbesondere auch eine Alterung oder eine zellenspezifische Charakteristik der jeweiligen Elektrolysezelle berücksichtigt werden.

Die Schutzeinheit ist vorzugsweise eine elektronische Schaltung beziehungsweise Hardware-Schaltung, die von der elektrischen Energiequelle mit elektrischer Energie versorgt wird. Die elektrische Energiequelle kann zum Beispiel eine Gleichspannungsquelle oder dergleichen aufweisen. Die elektrische Energiequelle kann zur Energieversorgung von mehr als einer einzigen Schutzeinheit ausgebildet sein. Die elektrische Energiequelle kann aber auch individuell zur Versorgung von genau einer einzigen Schutzeinheit ausgebildet sein. Hierzu kann sie zum Beispiel zumindest teilweise in die Schutzeinheit integriert sein. Die elektrische Energiequelle kann zum Beispiel elektrische Energie aus einem öffentlichen Energieversorgungsnetz oder einem elektrischen Energiespeicher nutzen.

Die Schutzeinheit ist vorzugsweise mit einer elektrischen Spannung der elektrischen Energiequelle beaufschlagt, sodass sie infolgedessen den jeweiligen Schutzstrom in Form eines getakteten Gleichstroms bereitstellt. Die Schutzeinheit ist vorzugsweise für jede Elektrolysezelle individuell vorgesehen und mit dieser elektrisch gekoppelt. Es kann aber auch vorgesehen sein, dass die Schutzeinheit zwei oder mehrere, insbesondere parallelgeschaltete, Elektrolysezellen mit dem Schutzstrom beaufschlagt.

Der getaktete Gleichstrom kann als Schutzstrom für eine Elektrolyse von Wasser zum Beispiel in einem Bereich derart gewählt sein, dass sich als Zellenspannung eine elektrische Spannung an der Elektrolysezelle von etwa 1,35 V bis etwa 1,45 V einstellt. Vorzugsweise ist die Spannung größer als 1,25 V. Eine Betriebsspannung im bestimmungsgemäßen Betrieb der Elektrolyse ist in der Regel deutlich größer als die Schutzspannung beziehungsweise die Spannung, die mit dem Schutzstrom erreicht wird. Im bestimmungsgemäßen Elektrolysebetrieb kann die Betriebsspannung an einer jeweiligen Elektrolysezelle bei der Elektrolyse von Wasser etwa 1,9 V betragen. Durch geeignete Elektrolyten und/oder Katalysatoren kann diese Spannung unter Umständen auch lediglich etwa 1,8 V betragen. Diese Werte sind jedoch abhängig von den jeweiligen konkreten Anwendungen und den zu elektrolysierenden Stoffen. Bei der Elektrolyse von Kohlenstoffdioxid oder einem anderen Stoff können diese Werte natürlich zum Teil deutlich abweichend sein.

Der elektrische Energiewandler beziehungsweise Energieumformer dient dazu, eine energietechnische Kopplung zwischen der elektrischen Energiequelle und der an die Schutzeinheit angeschlossenen Elektrolysezelle herzustellen beziehungsweise bereitzustellen. Der elektrische Energiewandler, gelegentlich auch Energieumformer genannt, kann dazu ausgebildet sein, die elektrische Energiequelle mit der Elektrolysezelle galvanisch getrennt zu koppeln. Der Energiewandler dient dazu, elektrische Energie in einer ersten Form in elektrische Energie wenigstens einer zweiten Form umzuwandeln. Der Energiewandler kann dazu ausgebildet sein, eine Energiewandlung nur unidirektional zu realisieren. Dem Grunde nach kann er aber auch ausgebildet sein, eine Energiewandlung zumindest teilweise beziehungsweise zeitweise bidirektional zu realisieren. Galvanisch getrennt beziehungsweise potentialfrei meint vorliegend insbesondere, dass keine elektrische Verbindung zu anderen elektrischen Potentialen vorzuliegen braucht. Der Energiewandler kann beispielsweise als Wechselrichter oder auch als Umrichter ausgebildet sein. Elektrolysezellenseitig ist er vorzugsweise derart ausgebildet, dass er den getakteten Gleichstrom mit einer einstellbaren Amplitude und/oder einem einstellbaren Tastverhältnis bereitstellt. Vorzugsweise kann eine Stromsteuerung realisiert sein.

Der elektrische Energiewandler kann aber auch als Hardwareschaltung, als Gleichspannungswandler oder dergleichen ausgebildet sein. Der elektrische Energiewandler kann Schaltelemente beziehungsweise elektronische Schaltelemente, insbesondere Halbleiterschalter, aufweisen, die der gewünschten Wandlungsfunktion dienen. Ein Schaltelement im Sinne dieser Offenbarung ist vorzugsweise ein steuerbares elektronisches Schaltelement, beispielsweise ein Transistor, ein Thyristor, Kombinationsschaltungen hiervon, insbesondere mit parallel geschalteten Freilaufdioden, beispielsweise ein Metalloxid-Semiconductor-Field-Effekt-Transistor (MOSFET), ein Insulated-Gate-BipolarTransistor (IGBT), vorzugsweise mit integrierten Freilaufdioden, oder dergleichen. Das Schaltelement wird im Schaltbetrieb betrieben.

Der Schaltbetrieb eines Halbleiterschalters in Form eines Transistors bedeutet, dass in einem eingeschalteten Schaltzustand zwischen den die Schaltstrecke bildenden Anschlüssen des Transistors ein sehr geringer elektrischer Widerstand bereitgestellt wird, sodass ein hoher Stromfluss bei sehr kleiner Restspannung möglich ist. Im ausgeschalteten Schaltzustand ist die Schaltstrecke des Transistors hochohmig, das heißt, sie stellt einen hohen elektrischen Widerstand bereit, sodass auch bei hoher an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren.

Gemäß einer Weiterbildung wird vorgeschlagen, dass eine elektrische Zellenspannung der Elektrolysezelle mittels einer Sensoreinheit erfasst wird, wobei zumindest ein Tastverhältnis, zumindest eine Frequenz oder zumindest eine Amplitude des getakteten Gleichstroms abhängig von der erfassten elektrischen Zellenspannung der Elektrolysezelle eingestellt wird. Dadurch ist es möglich, mittels der Schutzeinheit eine genaue individuelle Einstellung für den Schutzstrom erreichen zu können, sodass die unerwünschte Brennstoffzellenfunktionalität zuverlässig vermieden werden kann. Zugleich kann erreicht werden, dass der getaktete Gleichstrom so gewählt ist, dass ein minimaler Energieaufwand erforderlich ist, um die Schutzwirkung erreichen zu können. Insgesamt kann die Schutzfunktion somit sehr energieeffizient realisiert werden. Zugleich ist es möglich, die Sensoreinheit mit dem elektrischen Energiewandler zu koppeln und über Anschlussleitungen an den Elektroden nicht nur den getakteten Gleichstrom bereitzustellen, sondern zugleich auch die Zellenspannung der Elektrolysezelle erfassen zu können. Dadurch kann Verkabelungsaufwand reduziert werden. Diese Weiterbildung erlaubt es, den Schutzstrom individuell für die jeweilige Elektrolysezelle verbessert bereitstellen zu können.

Besonders vorteilhaft erweist es sich, wenn der getaktete Gleichstrom derart eingestellt wird, dass die erfasste elektrische Zellenspannung der Elektrolysezelle größer als eine Schutzspannung ist. Die Schutzspannung ist die Spannung, bei deren Unterschreitung die Brennstoffzellenfunktionalität auftreten kann beziehungsweise eintreten kann. Besonders durch die Beaufschlagung mit dem getakteten Gleichstrom kann es zu entsprechenden vom getakteten Gleichstrom bewirkten Spannungsschwankungen kommen, die jedoch durch geeignetes Einstellen des getakteten Gleichstroms so justiert werden können, dass die Schutzspannung möglichst zu keinem Zeitpunkt unterschritten wird.

Darüber hinaus wird vorgeschlagen, dass die Zellenspannung zumindest über eine Taktperiode des getakteten Gleichstroms, vorzugsweise kontinuierlich, erfasst wird. Das Erfassen der Zellenspannung kann zeitdiskret zu vorgegebenen beziehungsweise vorgebbaren Zeitpunkten erfolgen. Es kann vorgesehen sein, dass das Erfassen nur während eines jeweiligen Stromimpulses oder einer Taktpause der jeweiligen Taktperiode des getakteten Gleichstroms erfolgt. Vorzugsweise erfolgt das Erfassen jedoch sowohl während des jeweiligen Stromimpulses als auch während der Taktpause der jeweiligen Taktperiode. Die Zeitpunkte des Erfassens können vorzugsweise äquidistant gewählt sein. Eine Abtastrate genügt vorzugsweise dem Abtasttheorem nach Nyquist. Vorzugsweise ist die Abtastrate größer als der doppelte Wert der Frequenz des getakteten Gleichstroms. Besonders bevorzugt werden Abtastwerte der Zellenspannung quantisiert und digitalisiert. Es kann aber auch ein kontinuierliches Erfassen vorgesehen sein. In diesem Fall wird vorzugsweise ein analoges Spannungssignal bereitgestellt. Dies kann bei Bedarf für eine weitere Signalverarbeitung digitalisiert werden.

Erfindungsgemäss wird vorgeschlagen, dass die erfasste elektrische Zellenspannung und ein Zellenstrom der Elektrolysezelle ausgewertet werden und abhängig vom Auswerten ein Alterungszustand der Elektrolysezelle ermittelt wird. Dadurch ist es möglich, individuelle Veränderungen der Elektrolysezelle, beispielsweise in Bezug auf eine Betriebskennlinie oder dergleichen, für die Einstellung des Schutzstroms besser berücksichtigen zu können. Die Zuverlässigkeit kann dadurch weiter verbessert werden.

Weiter erfindungsgemäss wird vorgeschlagen, dass zumindest das Tastverhältnis oder zumindest die Amplitude des getakteten Gleichstroms ergänzend abhängig vom ermittelten Alterungszustand der Elektrolysezelle eingestellt wird. Diese Weiterbildung erlaubt es, alterungsabhängig immer den geeigneten Schutzstrom bereitstellen zu können. So kann während der Lebensdauer der Elektrolysezelle der Schutzstrom entsprechend des Alterungszustands nachgeführt werden. Insgesamt können dadurch die Zuverlässigkeit und Sicherheit weiter verbessert werden.

Ferner wird vorgeschlagen, dass zum Einstellen des Tastverhältnisses des getakteten Gleichstroms die Zellenspannung mit einer individuellen Schutzspannung der Elektrolysezelle verglichen wird und ein Stromimpuls des getakteten Gleichstroms abhängig von diesem Vergleich ausgelöst wird. Bei dieser Weiterbildung braucht also keine feste Frequenz für den getakteten Gleichstrom vorgegeben zu werden, weil ein jeweiliger Stromimpuls jeweils abhängig von dem Vergleich ausgelöst beziehungsweise aktiviert wird. Der Stromimpuls kann dann beispielsweise für eine vorgegebene Zeitdauer aktiviert sein. Es kann vorgesehen sein, dass die Zeitdauer der Aktivierung des Stromimpulses einstellbar ist. Das Auslösen kann zum Beispiel dadurch erfolgen, dass die Zellenspannung gleich der individuellen Schutzspannung oder auch kleiner als die individuelle Schutzspannung ist. Diese Funktionalität kann für vorzugsweise jeden Gleichstromimpuls vorgesehen sein.

Darüber hinaus wird vorgeschlagen, dass die Zellenspannung mit einer individuellen Schutzspannung der Elektrolysezelle verglichen wird und zumindest die Amplitude, das Tastverhältnis oder die Frequenz des getakteten Gleichstroms abhängig von diesem Vergleich eingestellt wird. Insbesondere handelt es sich bei dieser Weiterbildung um ein automatisiertes Vorgeben des getakteten Gleichstroms. Dem Grunde nach brauchen keine festen Stromimpulse vorgesehen zu sein. Dadurch ist es möglich, den getakteten Gleichstrom für den Schutzbetrieb möglichst günstig einzustellen. Das Einstellen kann abhängig von einer momentanen oder einer mittleren Zellenspannung erfolgen. Es kann aber auch vorgesehen sein, dass das Einstellen abhängig von einem Verlauf der Zellenspannung in einer Taktpause oder während eines jeweiligen Stromimpulses erfolgt. Auch Kombinationen hiervon können vorgesehen sein. Vorzugsweise wird die Frequenz möglichst groß gewählt.

Weiterhin wird vorgeschlagen, dass die Zellenspannung mit einem vorgegebenen Spannungsvergleichswert verglichen wird, der größer als die individuelle Schutzspannung ist, und ein jeweiliger Stromimpuls des getakteten Gleichstroms abhängig von diesem Vergleich beendet wird. So ist es möglich, das Ende eines jeweiligen Stromimpulses abhängig von dem Vergleich einzustellen, ohne dass hierfür eine äußere feste Vorgabe vorgegeben zu werden braucht. Der Stromimpuls wird beendet beziehungsweise deaktiviert, sobald sich ergibt, dass die Zellenspannung dem vorgegebenen Spannungsvergleichswert entspricht oder größer als der vorgegebene Spannungsvergleichswert ist. Diese Funktionalität kann für vorzugsweise jeden Gleichstromimpuls vorgesehen sein.

Vorzugsweise wird zumindest die individuelle Schutzspannung oder zumindest der Spannungsvergleichswert abhängig vom Alterungszustand ermittelt. Diese Funktionalität erlaubt es, dass die Beaufschlagung mit dem Schutzstrom alterungsabhängig realisiert werden kann.

Gemäß einer Weiterbildung wird vorgeschlagen, dass als individueller Schutzstrom dem getakteten Gleichstrom ein konstanter Gleichstrom überlagert wird. Mit dem Überlagern kann beispielsweise ein Addieren vorgesehen sein. Alternativ kann aber auch vorgesehen sein, dass ein Stromverknüpfungsglied, welches beispielsweise ein Diodennetzwerk umfassen kann, lediglich den Strom mit dem höheren Stromwert ausgibt. Dadurch ist es möglich, zusätzliche Einstellmöglichkeiten bezüglich der Schutzfunktion der Elektrolysezelle realisieren zu können. Beispielsweise kann hierdurch auch der elektrische Energiewandler vereinfacht ausgeführt werden, weil der Stromimpuls zum Beispiel nicht null zu erreichen braucht. Bei einer vorteilhaften Überlagerung kann die Amplitude des konstanten Gleichstroms dabei gegenüber der Amplitude des getakteten Gleichstroms bei gleicher Polarität deutlich geringer gewählt werden, beispielsweise in einem Bereich von 5%-25%. Somit ist durch diesen geringen Gleichstromanteil bereits eine Mindestschutzspannung als anteilige Vorspannung einer Elektrolysezelle bewirkt, die unterhalb des Wertes der Schutzspannung U_{S} eingestellt wird bzw. resultiert. Durch den konstanten Gleichstrom wird somit eine Mindestspannung als Teil der Schutzspannung bereitgestellt. Die Kombination von getaktetem Gleichstrom und konstantem Gleichstrom eröffnet eine Flexibilität der Ausführung der Schutzfunktion und der Bereitstellung einer erforderlichen Schutzspannung.

Es wird weiterhin vorgeschlagen, dass die Frequenz zumindest über einen Zeitraum konstant ist, der mehrere zeitlich aufeinanderfolgende Perioden des getakteten Gleichstroms aufweist. Dadurch kann ein reduzierter Aufwand in Bezug auf die Steuerung des getakteten Gleichstroms erreicht werden. Weiterhin kann eine Stabilität in Bezug auf den Schutzbetrieb verbessert werden.

Darüber hinaus wird vorgeschlagen, dass die Frequenz mindestens etwa 1 Hz, vorzugsweise etwa 100 Hz, besonders bevorzugt mindestens etwa 1 kHz beträgt. Die Frequenz kann auch größer als etwa 10 kHz sein. Sie kann zum Beispiel auch in einem Bereich von etwa 10 kHz bis etwa 200 kHz liegen. Dies ermöglicht es, eine möglichst kleine Amplitude des getakteten Gleichstroms erreichen zu können. hierdurch können zum Beispiel Wirkungen in Bezug auf Netzrückwirkungen eines Energieversorgungsnetzes und/oder in Bezug auf die elektromagnetische Verträglichkeit verbessert werden.

Gemäß einer Weiterbildung wird vorgeschlagen, dass die Zellenspannung mit einem unteren Vergleichswert, der so gewählt ist, dass eine Brennstoffzellenfunktionalität zuverlässig verhindert ist, und mit einem oberen Vergleichswert verglichen wird, der so gewählt ist, dass eine Elektrolysefunktionalität zuverlässig verhindert ist, wobei zumindest die Frequenz oder das Tastverhältnis abhängig von den Vergleichen eingestellt wird. Vorzugsweise ist der untere Vergleichswert größer als null. Dadurch kann ein Spannungsbereich für die Zellenspannung geschaffen werden, in dem die Zellenspannung durch entsprechendes Einstellen des getakteten Gleichstroms liegt. Es kann vorgesehen sein, dass nur die Frequenz oder nur das Tastverhältnis eingestellt wird. Der jeweils andere Parameter kann dann zum Beispiel fest vorgegeben sein. Insgesamt kann auch bei einer sehr kleinen Differenz zwischen dem unteren Vergleichswert und dem oberen Vergleichswert ein zuverlässiger Betriebszustand erreicht werden. Dies ist zum Beispiel dadurch möglich, dass die Frequenz entsprechend groß gewählt wird. Anpassungen können dann bedarfsweise zum Beispiel durch Verändern des Tastverhältnisses erreicht werden. Natürlich sind auch andere Steuerungsmodi denkbar.

Die für das erfindungsgemäße Verfahren angegebenen Vorteile und Wirkungen gelten natürlich gleichermaßen auch für die erfindungsgemäße Elektrolysevorrichtung, die erfindungsgemäße Schutzeinheit und das erfindungsgemäße Schutzgerät und umgekehrt. Insofern können Verfahrensmerkmale auch als Vorrichtungsmerkmale und umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
- FIG 1: in einer eine schematischen Schaltbilddarstellung eine Elektrolysevorrichtung mit einer Mehrzahl von in Reihe geschalteten Elektrolysezellen, die an eine Elektrolyseenergiequelle und eine dazu parallelgeschaltete Hilfsenergiequelle angeschlossen sind;
- FIG 2: in einer schematischen Diagrammdarstellung eine Polarisationskennlinie für eine Elektrolysezelle der Elektrolysevorrichtung gemäß FIG 1, bei der eine Zellenspannung der Elektrolysezelle abhängig von einem Elektrolysestrom der Elektrolysezelle dargestellt ist;
- FIG 3: in einer schematischen Schaltbilddarstellung wie FIG 1 eine Elektrolysevorrichtung, bei der zu jeder einzelnen Elektrolysezelle jeweils eine Schutzeinheit parallelgeschaltet ist;
- FIG 4: eine schematische Diagrammdarstellung, in der mittels jeweiliger Graphen ein getakteter Strom als Schutzstrom für eine Elektrolysezelle gemäß FIG 1 sowie eine Zellenspannung und ein Steuersignal für den Schutzstrom dargestellt sind,
- FIG 5: eine schematische Diagrammdarstellung eines Oszillogramms eines weiteren Schutzstroms,
- FIG 6: eine schematische Diagrammdarstellung einer Alterung der mit dem Schutzstrom gemäß FIG 5 beaufschlagten Elektrolysezelle, und
- FIG 7: eine schematische Blockschaltbilddarstellung einer Schutzeinheit gemäß FIG 3.

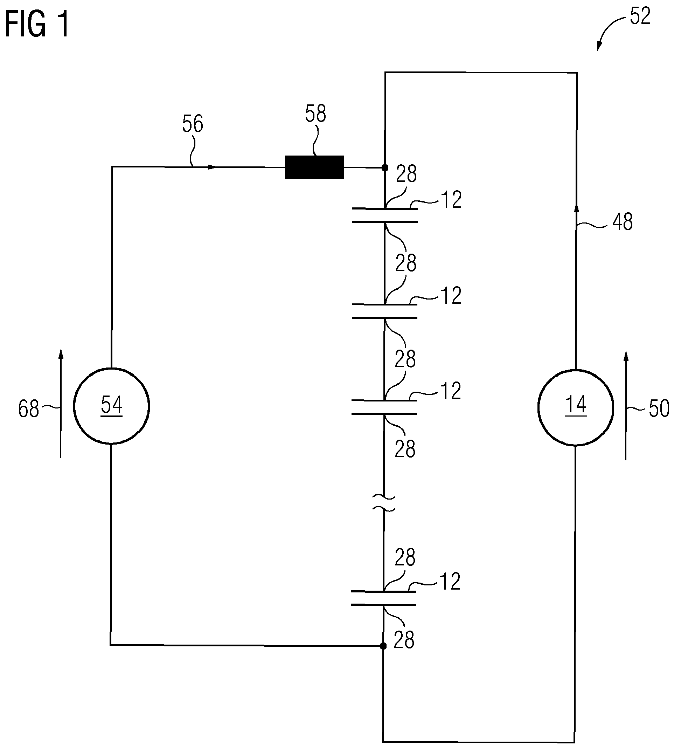

FIG 1 zeigt in einer schematischen Schaltbilddarstellung eine Elektrolysevorrichtung 52 mit einer Mehrzahl von elektrisch in Reihe geschalteten Elektrolysezellen 12. Die Elektrolysezellen 12 dienen vorliegend der Elektrolyse von Wasser zu Wasserstoff und Sauerstoff in einem nicht weiter dargestellten Reaktionsraum, der zwischen jeweiligen Elektroden der jeweiligen Elektrolysezelle 12 ausgebildet ist. In alternativen Ausgestaltungen kann hier natürlich auch ein anderer Stoff der Elektrolyse unterzogen werden, um diesen in entsprechende andere Stoffe umzuwandeln.

Die in Reihe geschalteten Elektrolysezellen 12 sind an einen Hauptgleichrichter 14 als Elektrolyseenergiequelle angeschlossen. Der Hauptgleichrichter 14 stellt eine Betriebsspannung 50 bereit, mit der die Reihenschaltung der Elektrolysezellen 12 beaufschlagt wird, sodass im bestimmungsgemäßen Betrieb, und zwar dem Elektrolysebetrieb, ein Elektrolysestrom 48 die Elektrolysezellen 12 durchströmt.

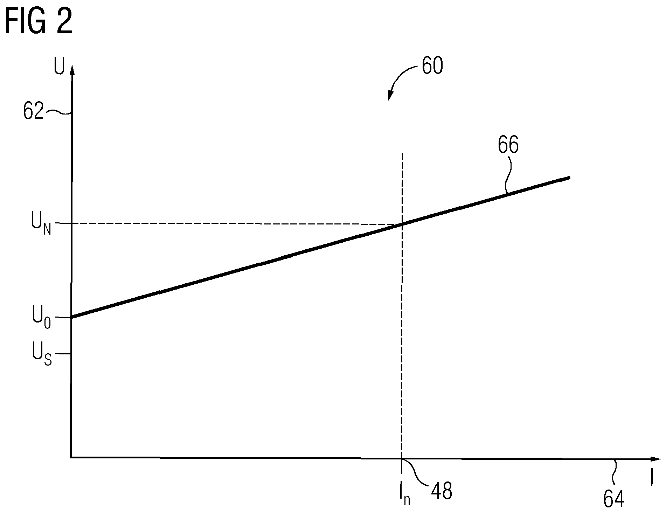

Parallel zum Hauptgleichrichter 14 ist an die Reihenschaltung der Elektrolysezellen 12 eine Reihenschaltung aus einem Polarisationsgleichrichter 54 und einer Schutzinduktivität 58 als Hilfsenergiequelle geschaltet. Der Polarisationsgleichrichter 54 und die Schutzinduktivität 58 dienen dazu, die Elektrolysezellen 12 außerhalb des bestimmungsgemäßen Elektrolysebetriebs mit einer Gleichrichterspannung 68 zu beaufschlagen, die so gewählt ist, dass sich ein Schutzstrom 56 einstellt, der seinerseits so gewählt ist, dass sämtliche Elektrolysezellen 12 zumindest mit einer Polarisationsspannung U_{O} (FIG 2) als Schutzspannung U_{S} beaufschlagt sind. Dadurch sollen unerwünschte Prozesse in den Elektrolysezellen 12 außerhalb des bestimmungsgemäßen Elektrolysebetriebs vermieden werden.

FIG 2 zeigt in einer schematischen Diagrammdarstellung ein Diagramm 60, bei dem eine Ordinate 62 einer Zellenspannung an jeweiligen Zellenanschlüssen 28 einer einzelnen der Elektrolysezellen 12 zugeordnet ist. Eine Abszisse 64 ist dem entsprechenden Zellenstrom dieser Elektrolysezelle 12 zugeordnet. Mit einem Graphen 66 ist die Abhängigkeit der Zellenspannung vom Zellenstrom dargestellt. U_{N} bezeichnet eine Elektrolysespannung, die sich an der Elektrolysezelle 12 im bestimmungsgemäßen Elektrolysebetrieb einstellt, wenn die Elektrolysezelle 12 mit dem Elektrolysestrom 48 beaufschlagt ist. Ein Schnittpunkt des Graphen 66 mit der Ordinate 62 definiert die Polarisationsspannung U_{O}, deren Unterschreitung einen Polarisationswechsel des Zellenstroms zur Folge haben kann.

In der vorliegenden Ausgestaltung der Elektrolysezelle für die Elektrolyse von Wasser beträgt die Elektrolysespannung U_{N} etwa 1,8 bis 1,9 V. Die Polarisationsspannung U_{O} kann in der vorliegenden Ausgestaltung etwa 1,48 V betragen. Abhängig von einer Konstruktion der Elektrolysezellen 12 kann die Polarisationsspannung U_{O} auch in einem Bereich von etwa 1,25 V bis etwa 1,45 V liegen. Bei einer Zellenspannung, die größer als etwa 1,48 V ist, beginnt bei der Elektrolysezelle 12 die Elektrolysefunktionalität, indem Wasserstoff sowie Sauerstoff erzeugt wird.

Die Elektrolysevorrichtung 52 gemäß FIG 1 erweist sich insofern als nachteilig, als dass es außerhalb des eigentlichen Elektrolyseprozesses beziehungsweise des bestimmungsgemäßen Elektrolysebetriebs weiterhin zu einer Gasproduktion kommen kann. Dabei kann es zu undefinierten Zuständen in der Elektrolysevorrichtung 52 kommen, die im ungünstigsten Fall sogar ein Entstehen eines zündfähigen Gasgemisches zur Folge haben kann. Um hier die Sicherheit zu gewährleisten, sind ergänzende umfangreiche Schutzmaßnahmen erforderlich.

Darüber hinaus kann insbesondere beim Anfahren der Elektrolysevorrichtung 52 oder auch beim Herunterfahren der Elektrolysevorrichtung 52 der Fall auftreten, dass sich aufgrund einer ungleichmäßigen Aufteilung einer Schutzspannung U_{S} jeweils über die in Reihe geschalteten Elektrolysezellen 12 bei einer oder mehreren der Elektrolysezellen 12 ein Unterschreiten der Polarisationsspannung U_{O} auftreten kann. Dies Problem kann unter anderem deshalb auftreten, weil die Elektrolysezellen 12 nicht sämtlich identisch sind und/oder einen unterschiedlichen Alterungszustand aufweisen. Dadurch kann ein unerwünschter Brennstoffzellenbetrieb auftreten, wodurch die jeweiligen Elektrolysezellen 12 beschädigt werden können.

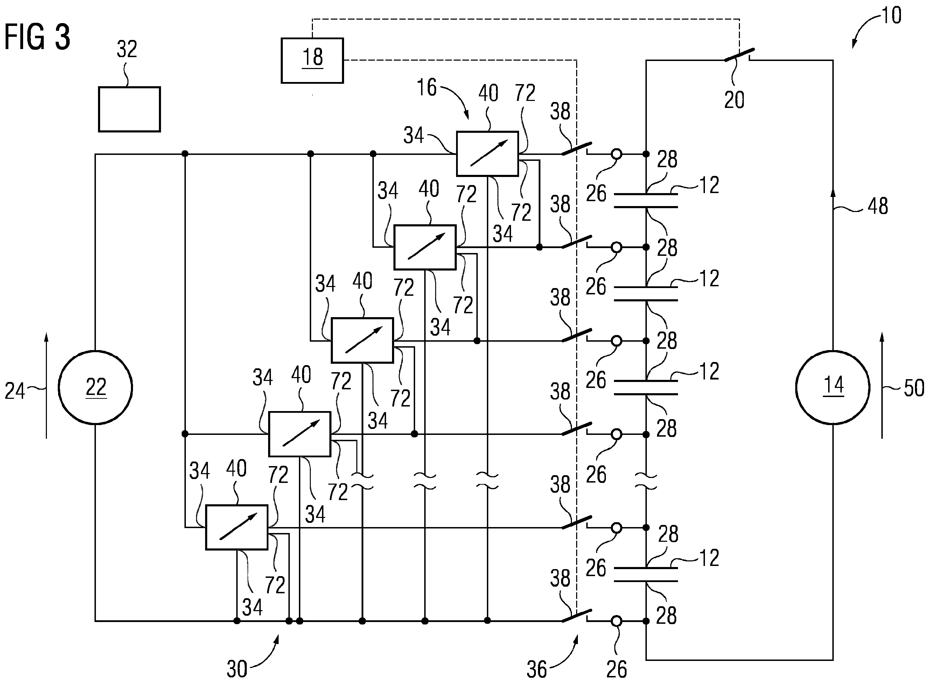

FIG 3 zeigt nun eine Elektrolysevorrichtung 10, bei der die vorgenannten Probleme reduziert, wenn nicht sogar vollständig vermieden werden können. Die Elektrolysevorrichtung 10 basiert auf der Elektrolysevorrichtung 52 gemäß FIG 1, weshalb ergänzend auf die diesbezüglichen Ausführungen verwiesen wird. Auch hier ist eine Reihenschaltung aus einer Mehrzahl von Elektrolysezellen 12 vorgesehen, die parallel an den Hauptgleichrichter 14 angeschlossen ist, um im bestimmungsgemäßen Elektrolysebetrieb mit elektrischer Energie versorgt zu werden. Insoweit entspricht die Elektrolysevorrichtung 10 der Elektrolysevorrichtung 52, weshalb auf die entsprechenden Ausführungen zu den FIG 1 und 2 verwiesen wird.

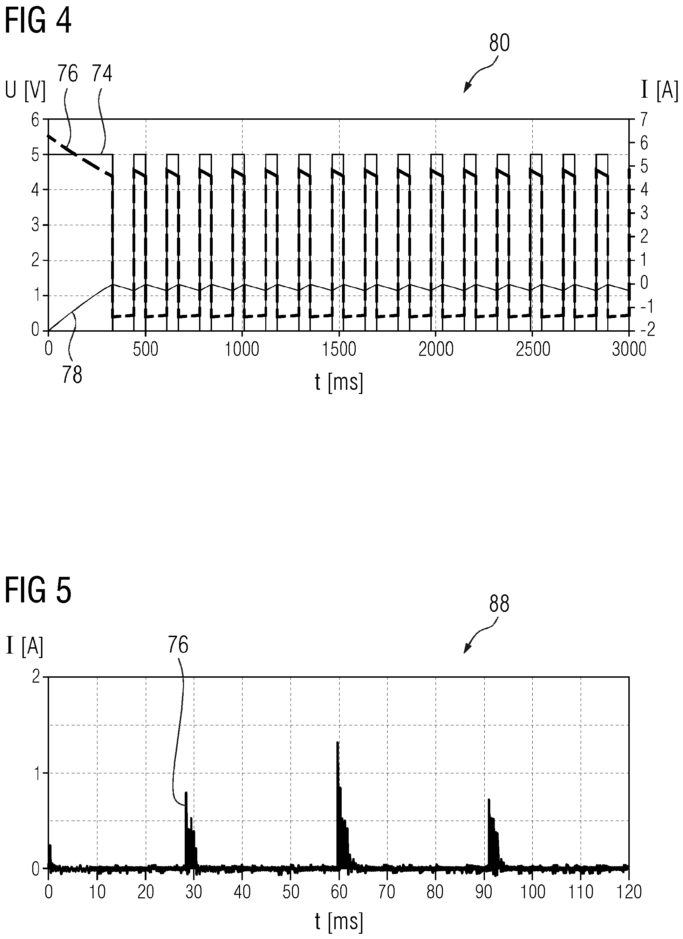

Im Unterschied zur Ausgestaltung gemäß FIG 1 ist bei der Elektrolysevorrichtung 10 gemäß FIG 3 vorgesehen, dass diese ein Schutzgerät 16 aufweist, das dem Bereitstellen eines individuellen Schutzstroms 76 (siehe FIG 4) für jede der in Reihe geschalteten Elektrolysezellen 12 dient. Das Schutzgerät 16 ist an die Elektrolysezellen 12, und zwar an deren Zellenanschlüsse 28, angeschlossen. Das Schutzgerät 16 weist eine elektrische Hilfsspannungsquelle 22 als elektrische Energiequelle auf, die dem Bereitstellen einer elektrischen Hilfsgleichspannung 24 dient. Ferner weist das Schutzgerät 16 Anschlusskontakte 26 zum elektrischen Verbinden mit den Zellenanschlüssen 28 der Elektrolysezellen 12 der Reihenschaltung auf. In der vorliegenden Ausgestaltung ist also vorgesehen, dass sämtliche Zellenanschlüsse 28 elektrisch mit dem Schutzgerät 16 gekoppelt sind.

Das Schutzgerät 16 weist ferner jeweilige Schutzeinheiten 40 mit Anschlüssen 72 auf, die jeweils über die Anschlusskontakte 26 und die Zellenanschlüsse 28 mit einer jeweiligen der Elektrolysezellen 12, und zwar deren Elektroden, elektrisch gekoppelt sind. Weiterhin weisen die Schutzeinheiten 40 jeweils zwei Verbindungsanschlüsse 34 auf, mittels denen sie mit der Hilfsspannungsquelle 22 elektrisch gekoppelt werden können. Dadurch ist es möglich, jede der Elektrolysezellen 12 individuell mit einem Schutzstrom 76 zu beaufschlagen, um auch unabhängig vom bestimmungsgemäßen Betrieb eine größere Zellenspannung als die Polarisationsspannung U_{O} zuverlässig erreichen zu können.

Die elektrische Hilfsspannungsquelle 22 kann zum Beispiel mit einem öffentlichen Energieversorgungsnetz oder dergleichen elektrisch gekoppelt sein. Jede Schutzeinheit 40 stellt für die jeweilige der Elektrolysezellen 12 einen individuellen Schutzstrom 76 bereit, sodass jeweils eine individuelle Schutzspannung U_{S} für eine Elektrolysezelle 12 erreicht werden kann.

Die jeweilige Schutzspannung U_{S} (siehe FIG 2) ist so gewählt, dass an keiner der Elektrolysezellen 12 eine Brennstoffzellenwirkung entsteht, das heißt, Gasreste in einer jeweiligen Elektrolysezelle 12 nach dem Brennstoffzellenprinzip zu Wasser reagieren und damit Energie freisetzen. Dies kann zu einer erheblichen Alterung einer jeweiligen Elektrolysezelle 12 führen.

Das Schutzgerät 16 weist ferner eine Schalteinheit 36 auf, die an die Anschlüsse 72 der Schutzeinheiten 40 und an die Anschlusskontakte 26 angeschlossen ist. Die Schalteinheit 36 ist für die Erfindung nicht zwingend erforderlich und kann - je nach Bedarf - auch entfallen oder modifiziert ausgebildet sein. Die Schalteinheit 36 ist in der vorliegenden Ausgestaltung ausgebildet, die Schutzeinheiten 40 zum Bereitstellen eines individuellen Schutzstroms 76 an den Anschlüssen 72 abhängig von einem Schaltzustand der Schalteinheit 36 mit den Anschlusskontakten 26 elektrisch zu koppeln. Dadurch ist die Möglichkeit geschaffen, dass die Schutzeinheiten 40 nur dann mit den Elektrolysezellen 12 elektrisch verbunden zu sein brauchen, wenn dies aufgrund der Betriebssituation der Elektrolysevorrichtung 10 erforderlich beziehungsweise gewünscht ist. So können die Schutzeinheiten 40 mittels der Schalteinheit 36 gegenüber den Elektrolysezellen 12 auch deaktiviert werden, wenn die Elektrolysezellen 12 bestimmungsgemäß im Elektrolysebetrieb betrieben werden. Dann ist der Schaltzustand eines entsprechenden individuellen Schaltelements 38 der Schalteinheit 36 offen. Darüber hinaus kann zum Beispiel vorgesehen sein, dass die Spannungssensoren 44 der Schutzeinheiten 40 für eine Erfassung der Zellenspannungen unmittelbar an die Anschlusskontakte 26 angeschlossen sind, wenn gewünscht ist, dass die Zellenspannungen unabhängig vom Schaltzustand der Schalteinheit 36 erfasst werden können sollen.

Die Schalteinheit 36 weist für jeden der Anschlusskontakte 26 jeweils ein individuelles Schaltelement 38 auf, welches vorliegend durch ein Reed-Relais beziehungsweise Reed-Kontakt gebildet ist. In alternativen Ausgestaltungen kann hier natürlich auch ein entsprechendes Relais beziehungsweise ein Schütz oder auch ein elektronisches Schaltelement vorgesehen sein.

Die Schaltelemente 38 werden hinsichtlich ihres jeweiligen Schaltzustands von einer Steuereinheit 18 der Elektrolysevorrichtung 10 gemeinsam gesteuert, sodass sämtliche der Schaltelemente 38 im Wesentlichen jeweils den gleichen Schaltzustand einnehmen. Die Steuereinheit 18 kann zu diesem Zweck eine Steuerschaltung umfassen, die unter anderem auch der Steuerung des Schutzgeräts 16 dient.

Zum Steuern der Schalteinheit 36 ist in der vorliegenden Ausgestaltung vorgesehen, dass ein Zellenstrom der Reihenschaltung der Elektrolysezellen 12 mittels eines Stromsensors 46 als Sensoreinheit erfasst wird. Der Stromsensor 46 liefert ein entsprechendes Sensorsignal an die Steuereinheit 18, die dieses Signal auswertet. Sobald das Sensorsignal kleiner als ein vorgegebener Vergleichswert ist, wird die Schalteinheit 36 vom ausgeschalteten Schaltzustand in den eingeschalteten Schaltzustand umgeschaltet. Das bedeutet, dass durch das Schutzgerät 16, das hierdurch nun aktiviert ist, jede Elektrolysezelle 12 mit dem entsprechenden individuellen Schutzstrom 76 beaufschlagt ist.

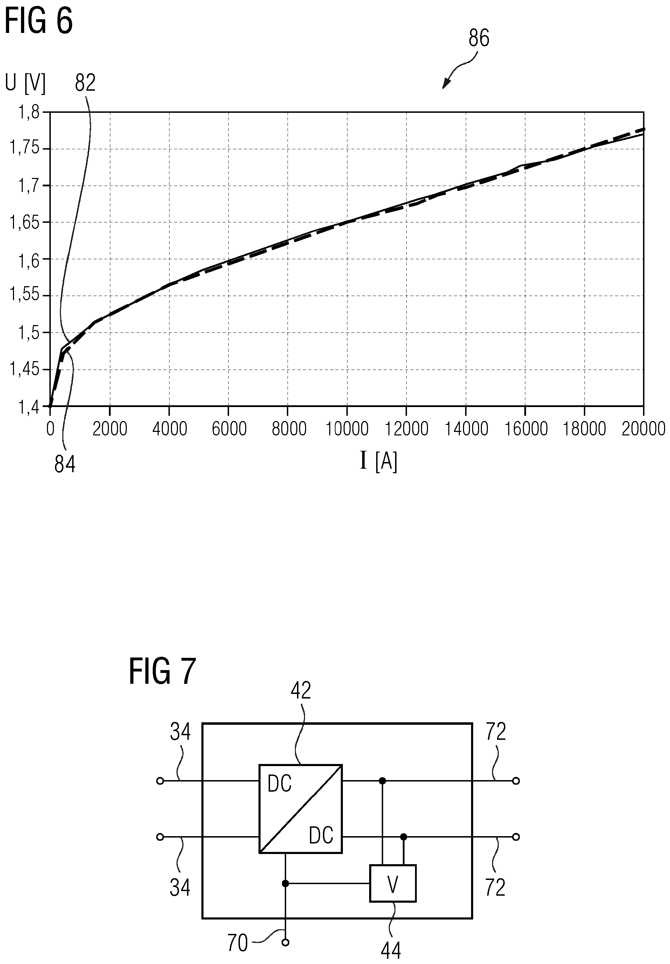

Die Schutzeinheiten 40 sind vorliegend identisch ausgebildet. Bei Bedarf kann dies jedoch auch anders sein. Eine der Schutzeinheiten 40 ist exemplarisch anhand einer schematischen Blockschaltbilddarstellung gemäß FIG 7 erläutert. Die Schutzeinheit 40 weist zum Bereitstellen des Schutzstroms 76 einen mit der elektrischen Hilfsspannungsquelle 22 gekoppelten elektronischen Spannungswandler 42 auf, der vorliegend als galvanisch trennender DC/DC-Wandler ausgebildet ist. Zugleich ist der Spannungswandler 42 ausgebildet, abhängig von einem Steuersignal den vorgebbaren Schutzstrom 76 abzugeben. Zu diesem Zweck ist der Spannungswandler 42 über einen Schnittstellenanschluss 70 an eine Steuereinheit 32 des Schutzgeräts 16 angeschlossen. Die Steuereinheit 32 stellt unter anderem das entsprechende Steuersignal bereit, sodass die mit der Schutzeinheit 40 gekoppelte Elektrolysezelle 12 mit dem individuellen Schutzstrom 76 beaufschlagt werden kann.

Darüber hinaus weist die Schutzeinheit 40 einen an die Anschlüsse 72 angeschlossenen Spannungssensor 44 auf, mit dem die Zellenspannung der Elektrolysezelle 12 erfasst werden kann. Ein entsprechendes Sensorsignal wird von dem Spannungssensor 44 über den Schnittstellenanschluss 70 an die Steuereinheit 32 übermittelt. Die Steuereinheit 32 wertet unter anderem das Sensorsignal aus und ermittelt abhängig hiervon einen einzustellenden Schutzstrom 76. Abhängig vom ermittelten Schutzstrom 76 wird das Steuersignal an den Spannungswandler 42 übermittelt.

Vorliegend ist vorgesehen, dass die Schutzeinheiten 40 des Schutzgeräts 16 alle gleich ausgebildet sind und mittels der Steuereinheit 32 gesteuert werden können.

FIG 4 zeigt in einer schematischen Diagrammdarstellung für eine der Elektrolysezellen 12 gemäß FIG 3 exemplarisch einen Schutzstrom 76 für die mit der jeweiligen Elektrolysezelle 12 gekoppelte Schutzeinheit 40. In dem in FIG 4 dargestellten Diagramm 80 ist eine linke Ordinate der elektrischen Spannung in V und eine rechte Ordinate dem elektrischen Strom in A zugeordnet. Eine Abszisse ist einer Zeitachse in ms zugeordnet. Mit einem Graphen 74 ist ein wandlerinternes Wandlersteuersignal 74 des Spannungswandlers 42 dargestellt, welches die Abgabe des Schutzstroms 76 steuert. Vorliegend handelt es sich bei dem Wandlersteuersignal 74 um ein Rechtecksignal, sodass der Spannungswandler 42 einen getakteten Gleichstrom bereitzustellen vermag. Der getaktete Gleichstrom, der den Schutzstrom 76 darstellt, ist mittels eines entsprechenden Graphen 76 - in gestrichelter Linie - dargestellt. Es ist ersichtlich, dass der Schutzstrom 76 synchron zum Wandlersteuersignal 74 ein- beziehungsweise ausgeschaltet wird.

Während dieses Betriebs wird die Zellenspannung der Elektrolysezelle 12 mittels des Spannungssensors 44 erfasst. Hierfür brauchen vorliegend keine separaten Leitungen vorgesehen zu werden, wie dies anhand von FIG 7 bereits erläutert worden ist. Zu erkennen ist, dass die Elektrolysezelle 12 aufgrund des getakteten Gleichstroms als Schutzstrom 76 eine um einen geringfügigen Betrag schwankende Gleichspannung 78 als Zellenspannung zeigt. Die Spannungsschwankung liegt vorliegend in einem Bereich von etwa 1,25 V bis etwa 1,35 V. Der Spannungsverlauf gemäß dem Graphen 78 ergibt sich aufgrund der kapazitiven Wirkung der Elektrolysezelle 12. Dies erklärt im Übrigen auch, weshalb gemäß dem Graphen 76 während einer jeweiligen Dauer eines jeweiligen Gleichstromimpulses die Amplitude nicht konstant ist, sondern geringfügig abfällt. Dies ist ebenfalls eine Reaktion aufgrund der kapazitiven Eigenschaft der Elektrolysezelle 12.

Mit dem Steuersignal der Steuereinheit 32 kann je nach Bedarf eine Amplitude des getakteten Gleichstroms sowie auch ein Tastverhältnis des getakteten Gleichstroms eingestellt werden. Zu diesem Zweck kann die Steuereinheit 32 eine entsprechende Auswertung des Sensorsignals des Spannungssensors 44 vornehmen. Auf jeden Fall werden die Amplitude und das Tastverhältnis des getakteten Gleichstroms derart bestimmt, dass die erfasste elektrische Zellenspannung der Elektrolysezelle 12 größer als die entsprechend zugehörige Schutzspannung ist. Darüber hinaus kann unter Berücksichtigung der Zellenspannung sowie des durch den getakteten Gleichstrom als Schutzstrom bewirkten Zellenstrom der Elektrolysezelle 12 abhängig von einem Auswerten ein Alterungszustand der Elektrolysezelle 12 ermittelt werden. Das Tastverhältnis und/oder die Amplitude des getakteten Gleichstroms können dann ergänzend abhängig vom ermittelten Alterungszustand der Elektrolysezelle 12 eingestellt werden.

In einer alternativen Ausgestaltung kann vorgesehen sein, dass unter Nutzung des Sensorsignals des Spannungssensors 44 eine Regelung realisiert werden kann. Zu diesem Zweck kann vorgesehen sein, dass zum Einstellen des Tastverhältnisses des getakteten Gleichstroms die Zellenspannung mit einer individuellen Schutzspannung U_{S} (vgl. FIG 2) einer Elektrolysezelle 12 verglichen wird, und ein jeweiliger Stromimpuls des getakteten Gleichstroms abhängig von diesem Vergleich ausgelöst wird. Sodann kann die Zellenspannung mit einem vorgegebenen Spannungsvergleichswert verglichen werden, der größer als die individuelle Schutzspannung U_{S} ist, und der Stromimpuls des getakteten Gleichstroms kann abhängig von diesem Vergleich beendet werden. Durch Wahl des vorgegebenen Spannungsvergleichswerts kann somit ein Tastverhältnis und/oder auch eine Frequenz des getakteten Gleichstroms eingestellt werden.

Darüber hinaus kann vorgesehen sein, dass als individueller Schutzstrom 76 dem getakteten Gleichstrom zusätzlich noch ein konstanter Gleichstrom überlagert wird in einer alternativen bzw. weiter verbesserten Ausgestaltung der Schutzfunktion. Dadurch kann zum Beispiel erreicht werden, dass der Schutzstrom den Wert Null nicht erreicht. Dies kann die Zuverlässigkeit und Sicherheit verbessern. Bei einer solchen vorteilhaften Überlagerung kann der konstante Gleichstrom dabei gegenüber der Amplitude des getakteten Gleichstroms bei gleicher Polarität deutlich geringer gewählt werden, beispielsweise in einem Bereich von 10%-25%, typischerweise etwa 15%. Somit ist durch diesen geringen Gleichstromanteil bereits eine Mindestschutzspannung als anteilige Vorspannung einer Elektrolysezelle bewirkt, die unterhalb des Wertes der Schutzspannung U_{S} eingestellt wird bzw. entsprechend der Amplitude des konstanten Gleichstroms resultiert. Die Kombination von getaktetem Gleichstrom und konstantem Gleichstrom eröffnet eine Flexibilität der Ausführung der Schutzfunktion und der Bereitstellung der Schutzspannung U_{S}.

FIG 5 zeigt in einer weiteren schematischen Diagrammdarstellung ein Oszillogramm 88 eines weiteren Schutzstroms. Der Schutzstrom 76 ist wieder mit einem entsprechenden Graphen 76 dargestellt. Eine Abszisse ist der Zeit in ms zugeordnet, wohingegen eine Ordinate einem Strom in A zugeordnet ist. Zu erkennen ist, dass bei dieser Ausgestaltung der getaktete Gleichstrom Stromimpulse in einem Bereich zwischen 0,5 und 1,5 A aufweist. Die Stromimpulse sind vorliegend über einen jeweiligen Zeitraum beabstandet, der etwa 145 ms beträgt.

FIG 6 zeigt in einer weiteren schematischen Diagrammdarstellung ein Diagramm 86, anhand dessen erkannt werden kann, wie sich der getaktete Schutzstrom auf eine Alterung der Elektrolysezelle 12 auswirkt. Eine Abszisse ist dem elektrischen Strom in A zugeordnet, wohingegen eine Ordinate der elektrischen Spannung in V zugeordnet ist. Mit einem Graphen 84 ist eine so genannte Polarisationskurve einer Elektrolysezelle 12 zu Beginn der Beaufschlagung mit einem Schutzstrom gemäß FIG 5 dargestellt. Mit einem Graphen 82 ist eine weitere Polarisationskurve am Ende eines Untersuchungszeitraums dargestellt. Die Untersuchung wurde an einer Elektrolysezelle 12 mit einer Elektrodenfläche von etwa 10 cm² mit einer Bestromung über einen Zeitraum von 166 Stunden als Untersuchungszeitraum mit einem Schutzstrom von maximal etwa 1,3 A durchgeführt. Anhand der Graphen 84 und 82 ist ersichtlich, dass es keine signifikanten Unterschiede in Bezug auf die Polarisationskurve gegeben hat. Daraus leitet sich ab, dass keine messbare Alterung der Brennstoffzelle 12 erfolgt ist.

Die Frequenz des getakteten Gleichstroms kann in einem Bereich von etwa 10 Hz bis etwa 100 Hz gewählt sein. Vorzugsweise liegt sie in einem Bereich von etwa 30 Hz.

Die Ausführungsbeispiele dienen ausschließlich der Erläuterung der Erfindung und sollen diese nicht beschränken.

## Patentansprüche

1. Verfahren zum Betreiben einer Elektrolysezelle (12), die im bestimmungsgemäßen Betrieb mit einem elektrischen Elektrolysestrom (48) beaufschlagt wird, um eine Elektrolyse eines in einem Reaktionsraum der Elektrolysezelle (12) angeordneten Stoffs durchzuführen, wobei die Elektrolysezelle (12) in einem von dem bestimmungsgemäßen Betrieb verschiedenen Betriebszustand mit einem Gleichstrom als individuellem Schutzstrom (76) beaufschlagt wird,
**dadurch gekennzeichnet, dass**
die Elektrolysezelle (12) mit einem getakteten Gleichstrom als dem individuellen Schutzstrom (76) beaufschlagt wird, wobei die erfasste elektrische Zellenspannung und ein Zellenstrom der Elektrolysezelle (12) ausgewertet werden und abhängig vom Auswerten ein Alterungszustand der Elektrolysezelle (12) ermittelt wird, und wobei zumindest das Tastverhältnis oder zumindest die Amplitude des getakteten Gleichstroms ergänzend abhängig vom ermittelten Alterungszustand der Elektrolysezelle (12) eingestellt wird.

2. Verfahren nach Anspruch 1, **dadurch gekennzeichnet, dass** eine elektrische Zellenspannung der Elektrolysezelle (12) mittels einer Sensoreinheit (46) erfasst wird, wobei zumindest ein Tastverhältnis, zumindest eine Frequenz oder zumindest eine Amplitude des getakteten Gleichstroms abhängig von der erfassten elektrischen Zellenspannung der Elektrolysezelle (12) eingestellt wird.

3. Verfahren nach Anspruch 2, **dadurch gekennzeichnet, dass** die Zellenspannung zumindest über eine Taktperiode des getakteten Gleichstroms, vorzugsweise kontinuierlich, erfasst wird.

4. Verfahren nach einem der vorhergehenden Ansprüche, **dadurch gekennzeichnet, dass** die Zellenspannung mit einer individuellen Schutzspannung der Elektrolysezelle (12) verglichen wird und zumindest die Amplitude oder die Frequenz des getakteten Gleichstroms abhängig von diesem Vergleich eingestellt wird.

5. Verfahren nach einem der vorhergehenden Ansprüche, **dadurch gekennzeichnet, dass** die Zellenspannung mit einem vorgegebenen Spannungsvergleichswert verglichen wird, der größer als die individuelle Schutzspannung ist, und ein jeweiliger Stromimpuls des getakteten Gleichstroms abhängig von diesem Vergleich beendet wird.

6. Verfahren nach Anspruch 4 oder 5, **dadurch gekennzeichnet, dass** zumindest die individuelle Schutzspannung oder zumindest der Spannungsvergleichswert abhängig vom Alterungszustand ermittelt wird.

7. Verfahren nach einem der vorhergehenden Ansprüche, **dadurch gekennzeichnet, dass** als individueller Schutzstrom (76) dem getakteten Gleichstrom ein konstanter Gleichstrom überlagert wird.

8. Verfahren nach Anspruch 7, **dadurch gekennzeichnet, dass** bei einer Überlagerung die Amplitude des konstanten Gleichstroms gegenüber der Amplitude des getakteten Gleichstroms bei gleicher Polarität geringer eingestellt wird, so dass durch den konstanten Gleichstrom eine Mindestspannung als Teil der Schutzspannung (U_{S}) bereitgestellt wird.

9. Verfahren nach Anspruch 8, **dadurch gekennzeichnet, dass** das Amplitudenverhältnis von konstantem Gleichstrom und de getakteten Gleichstrom im Bereich von 5% bis 25% eingestellt wird.

10. Verfahren nach einem der vorhergehenden Ansprüche, **dadurch gekennzeichnet, dass** die Frequenz zumindest über einen Zeitraum konstant ist, der mehrere zeitlich aufeinanderfolgende Perioden des getakteten Gleichstroms aufweist.

11. Verfahren nach einem der vorhergehenden Ansprüche, **dadurch gekennzeichnet, dass** die Frequenz mindestens 1 Hz, vorzugsweise 100 Hz, besonders bevorzugt mindestens 1 kHz beträgt.

12. Verfahren nach einem der vorhergehenden Ansprüche, **dadurch gekennzeichnet, dass** die Zellenspannung mit einem unteren Vergleichswert, der so gewählt ist, dass eine Brennstoffzellenfunktionalität zuverlässig verhindert ist, und mit einem oberen Vergleichswert verglichen wird, der so gewählt ist, dass eine Elektrolysefunktionalität zuverlässig verhindert ist, wobei zumindest die Frequenz abhängig von den Vergleichen eingestellt wird.

13. Schutzeinheit (40) für eine Elektrolysezelle (12), wobei die Elektrolysezelle (12) ausgebildet ist, in einem bestimmungsgemäßen Betrieb mit einem elektrischen Elektrolysestrom (48) beaufschlagt zu werden, um eine Elektrolyse eines in einem Reaktionsraum der Elektrolysezelle (12) angeordneten Stoffs durchzuführen, mit:
- wenigstens zwei Anschlusskontakten zum elektrischen Anschließen an Elektroden der Elektrolysezelle (12),
- wenigstens zwei Verbindungsanschlüssen zum elektrischen Verbinden mit einer elektrischen Energiequelle,
- einem mit den wenigstens zwei Verbindungsanschlüssen und den Anschlusskontakten elektrisch gekoppelten, steuerbaren elektrischen Energiewandler, der ausgebildet ist, die Elektrolysezelle (12) in einem von dem bestimmungsgemäßen Betrieb verschiedenen Betriebszustand mit einem Gleichstrom als individuellem Schutzstrom (76) zu beaufschlagen,
**dadurch gekennzeichnet, dass** die elektrische Zellenspannung und ein Zellenstrom der Elektrolysezelle (12) erfassbar und auswertbar sind und abhängig vom Auswerten ein Alterungszustand der Elektrolysezelle (12) ermittelbar ist, wobei zumindest das Tastverhältnis oder zumindest die Amplitude eines getakteten Gleichstroms ergänzend abhängig vom ermittelten Alterungszustand der Elektrolysezelle (12) einstellbar ist, und dass
der Energiewandler ausgebildet ist, die Elektrolysezelle (12) mit einem getakteten Gleichstrom als dem individuellen Schutzstrom (76) zu beaufschlagen.

14. Schutzgerät für eine eine Mehrzahl von elektrisch in Reihe geschalteten Elektrolysezellen (12) aufweisenden Elektrolysevorrichtung (10), mit:
- einer Mehrzahl von Schutzeinheiten, wobei jede der Elektrolysezellen (12) mit jeweils einer Schutzeinheit elektrisch gekoppelt ist,
- wenigstens einer elektrischen Energiequelle zum Versorgen der Schutzeinheiten mit elektrischer Energie, und
- einer Steuereinheit zum individuellen Steuern der Schutzeinheiten,
**dadurch gekennzeichnet, dass**
die Schutzeinheiten gemäß Anspruch 13 ausgebildet sind.

15. Elektrolysevorrichtung (10), mit einer Mehrzahl von elektrisch in Reihe geschalteten Elektrolysezellen (12) sowie einem mit den Elektrolysezellen (12) elektrisch gekoppelten Schutzgerät,
**dadurch gekennzeichnet, dass**
das Schutzgerät gemäß Anspruch 14 ausgebildet ist.

## Claims

1. A method for operating an electrolysis cell (12) which is supplied with an electrical electrolysis current (48) in the intended operation in order to carry out an electrolysis of a substance arranged in a reaction space of the electrolysis cell (12), wherein the electrolysis cell (12) is supplied with a direct current as an individual protective current (76) in an operating state different from the intended operation, **characterised in that**
the electrolysis cell (12) is supplied with a clocked direct current as the individual protective current (76), wherein the detected electrical cell voltage and a cell current of the electrolysis cell (12) are evaluated and an ageing state of the electrolysis cell (12) is determined as a function of the evaluation and wherein at least the duty factor or at least the amplitude of the clocked direct current is additionally set as a function of the determined ageing state of the electrolysis cell (12).

2. The method according to claim 1, **characterised in that** an electrical cell voltage of the electrolysis cell (12) is detected by means of a sensor unit (46), wherein at least one duty factor, at least one frequency or at least one amplitude of the clocked direct current is set as a function of the detected electrical cell voltage of the electrolysis cell (12).

3. The method according to claim 2, **characterised in that** the cell voltage is detected, preferably continually, at least over one clock period of the clocked direct current.

4. The method according to any one of the preceding claims, **characterised in that** the cell voltage is compared with an individual protective voltage of the electrolysis cell (12) and at least the amplitude or the frequency of the clocked direct current is set as a function of this comparison.

5. The method according to any one of the preceding claims, **characterised in that** the cell voltage is compared with a specified voltage comparison value which is greater than the individual protective voltage and a respective current impulse of the clocked direct current is halted as a function of this comparison.

6. The method according to claims 4 or 5, **characterised in that** at least the individual protective voltage or at least the voltage comparison value is determined as a function of the ageing state.

7. The method according to any one of the preceding claims, **characterised in that** a constant direct current is superimposed as an individual protective current (76) on the clocked direct current.

8. The method according to claim 7, **characterised in that**, with a superimposition, the amplitude of the constant direct current is, with a same polarity, set smaller with respect to the amplitude of the clocked direct current, so that a minimum voltage is provided as part of the protective voltage (U_{S}) by the constant direct current.

9. The method according to claim 8, **characterised in that** the amplitude ratio of the constant direct current and the clocked direct current is set in the range of 5% to 25%.

10. The method according to any one of the preceding claims, **characterised in that** the frequency is constant at least over a period of time which has a plurality of temporally successive periods of the clocked direct current.

11. The method according to any one of the preceding claims, **characterised in that** the frequency is at least 1 Hz, preferably 100 Hz, particularly preferably at least 1 kHz.

12. The method according to any one of the preceding claims, **characterised in that** the cell voltage is compared with a lower comparison value which is selected such that a fuel cell functionality is reliably prevented and with an upper comparison value which is selected such that an electrolysis functionality is reliably prevented, wherein at least the frequency is set as a function of the comparisons.

13. A protective unit (40) for an electrolysis cell (12), wherein the electrolysis cell (12) is configured to be supplied with an electrical electrolysis current (48) in an intended operation in order to carry out an electrolysis of a substance arranged in a reaction space of the electrolysis cell (12), with:
- at least two terminal contacts for electrically terminating at electrodes of the electrolysis cell (12),
- at least two connection terminals for electrically connecting to an electrical energy source,
- a controllable electrical energy converter electrically coupled to the at least two connection terminals and the terminal contacts, which is configured to supply a direct current as an individual protective current (76) to the electrolysis cell (12) in an operating state different from the intended operation, **characterised in that** the electrical cell voltage and a cell current of the electrolysis cell (12) are detectable and evaluable and an ageing state of the electrolysis cell (12) is determinable as a function of the evaluation, wherein at least the duty factor or at least the amplitude of a clocked direct current is additionally settable as a function of the determined ageing state of the electrolysis cell (12), and **in that**
the energy converter is configured to supply the electrolysis cell (12) with a clocked direct current as the individual protective current (76).

14. A protective apparatus for an electrolysis device (10) having a plurality of electrolysis cells (12) electrically connected in series, with:
- a plurality of protective units, wherein each of the electrolysis cells (12) is electrically coupled with a respective protective unit,
- at least one electrical energy source for provisioning the protective units with electrical energy, and
- a control unit for individually controlling the protective units,
**characterised in that**
the protective units are configured according to claim 13.

15. An electrolysis device (10) with a plurality of electrolysis cells (12) electrically connected in series and a protective apparatus electrically coupled with the electrolysis cells (12),
**characterised in that**
the protective apparatus is configured according to claim 14.

## Revendications

1. Procédé de fonctionnement d'une cellule d'électrolyse (12) à laquelle, lors d'un fonctionnement prévu, un courant d'électrolyse électrique (48) est appliqué pour réaliser une électrolyse d'une substance disposée dans un espace de réaction de la cellule d'électrolyse (12), dans lequel un courant continu est appliqué à la cellule d'électrolyse (12) en tant que courant de protection individuel (76) dans un état de fonctionnement différent du fonctionnement prévu,
**caractérisé en ce qu'**un courant continu pulsé est appliqué à la cellule d'électrolyse (12) en tant que courant de protection individuel (76), dans lequel la tension de cellule électrique détectée et un courant de cellule de la cellule d'électrolyse (12) sont évalués, et un état de vieillissement de la cellule d'électrolyse (12) est déterminé en fonction de l'évaluation, et dans lequel au moins le rapport cyclique ou au moins l'amplitude du courant continu pulsé est réglé de manière complémentaire en fonction de l'état de vieillissement déterminé de la cellule d'électrolyse (12).

2. Procédé selon la revendication 1, **caractérisé en ce qu'**une tension de cellule électrique de la cellule d'électrolyse (12) est détectée au moyen d'une unité de capteur (46), dans lequel au moins un rapport cyclique, au moins une fréquence ou au moins une amplitude du courant continu pulsé est réglé en fonction de la tension de cellule électrique détectée de la cellule d'électrolyse (12).

3. Procédé selon la revendication 2, **caractérisé en ce que** la tension de cellule est détectée au moins sur une période de cycle du courant continu pulsé, de préférence en continu.

4. Procédé selon l'une quelconque des revendications précédentes, **caractérisé en ce que** la tension de cellule est comparée à une tension de protection individuelle de la cellule d'électrolyse (12) et au moins l'amplitude ou la fréquence du courant continu pulsé est réglée en fonction de cette comparaison.

5. Procédé selon l'une quelconque des revendications précédentes, **caractérisé en ce que** la tension de cellule est comparée à une valeur de comparaison de tension prédéfinie qui est supérieure à la tension de protection individuelle, et une impulsion de courant respective du courant continu pulsé est interrompue en fonction de cette comparaison.

6. Procédé selon la revendication 4 ou 5, **caractérisé en ce qu'**au moins la tension de protection individuelle ou au moins la valeur de comparaison de tension est déterminée en fonction de l'état de vieillissement.

7. Procédé selon l'une quelconque des revendications précédentes, **caractérisé en ce qu'**un courant continu constant est superposé au courant continu pulsé en tant que courant de protection individuel (76).

8. Procédé selon la revendication 7, **caractérisé en ce que**, lors d'une superposition, l'amplitude du courant continu constant est réglée pour être inférieure à l'amplitude du courant continu pulsé de même polarité, de sorte qu'une tension minimale soit fournie par le courant continu constant en tant que partie de la tension de protection (US).

9. Procédé selon la revendication 8, **caractérisé en ce que** le rapport d'amplitude entre le courant continu constant et le courant continu pulsé est réglé dans la plage de 5 % à 25 %.

10. Procédé selon l'une quelconque des revendications précédentes, **caractérisé en ce que** la fréquence est constante au moins sur une période de temps qui comprend plusieurs périodes consécutives du courant continu pulsé.

11. Procédé selon l'une quelconque des revendications précédentes, **caractérisé en ce que** la fréquence est d'au moins 1 Hz, de préférence de 100 Hz, de manière particulièrement préférée d'au moins 1 kHz.

12. Procédé selon l'une quelconque des revendications précédentes, **caractérisé en ce que** la tension de cellule est comparée à une valeur de comparaison inférieure, qui est choisie de telle sorte qu'une fonctionnalité de pile à combustible soit empêchée de manière fiable, et à une valeur de comparaison supérieure, qui est choisie de sorte qu'une fonctionnalité d'électrolyse soit empêchée de manière fiable, dans lequel au moins la fréquence est réglée en fonction des comparaisons.

13. Unité de protection (40) pour une cellule d'électrolyse (12), dans laquelle la cellule d'électrolyse (12) est conçue pour qu'un courant d'électrolyse électrique (48) lui soit appliqué lors d'un fonctionnement prévu afin de réaliser une électrolyse d'une substance disposée dans un espace de réaction de la cellule d'électrolyse (12), comprenant :
- au moins deux contacts de raccordement destinés à être reliés électriquement à des électrodes de la cellule d'électrolyse (12),
- au moins deux raccords de liaison destinés à être reliés électriquement à une source d'énergie électrique,
- un convertisseur d'énergie électrique commandable, couplé électriquement auxdits au moins deux raccords de liaison et auxdits contacts de raccordement, qui est conçu pour appliquer un courant continu en tant que courant de protection individuel (76) à la cellule d'électrolyse (12) dans un état de fonctionnement différent du fonctionnement prévu, **caractérisée en ce que** la tension de cellule électrique et un courant de cellule de la cellule d'électrolyse (12) sont aptes à être détectés et évalués, et un état de vieillissement de la cellule d'électrolyse (12) est apte à être déterminé en fonction de l'évaluation, dans laquelle au moins le rapport cyclique ou au moins l'amplitude d'un courant continu pulsé est réglable de manière complémentaire en fonction de l'état de vieillissement déterminé de la cellule d'électrolyse (12), et **en ce que**
le convertisseur d'énergie est conçu pour appliquer un courant continu pulsé en tant que courant de protection individuel (76) à la cellule d'électrolyse (12).

14. Dispositif de protection pour un appareil d'électrolyse (10) présentant une pluralité de cellules d'électrolyse (12) montées électriquement en série, comprenant :
- une pluralité d'unités de protection, dans lequel chacune des cellules d'électrolyse (12) est couplée électriquement à une unité de protection respective,
- au moins une source d'énergie électrique pour alimenter les unités de protection en énergie électrique, et
- un dispositif de commande pour commander individuellement les unités de protection,
**caractérisé en ce que** les unités de protection sont conçues selon la revendication 13.

15. Appareil d'électrolyse (10), comprenant une pluralité de cellules d'électrolyse (12) montées électriquement en série ainsi qu'un dispositif de protection couplé électriquement aux cellules d'électrolyse (12), **caractérisé en ce que** le dispositif de protection est conçu selon la revendication 14.
